**Europäisches Patentamt**

**European Patent Office**

**Office européen des brevets**

(19)

(11) Veröffentlichungsnummer : **0 365 046 B1**

(12) # EUROPÄISCHE PATENTSCHRIFT

(45) Veröffentlichungstag der Patentschrift :
**04.09.91 Patentblatt 91/36**

(51) Int. Cl.$^5$ : **C04B 14/02, C04B 16/00, C04B 20/02**

(21) Anmeldenummer : **89121449.6**

(22) Anmeldetag : **05.06.87**

Die Akte enthält technische Angaben, die nach dem Eingang der Anmeldung eingereicht wurden und die nicht in dieser Patentschrift enthalten sind.

(30) Priorität : **09.06.86 DE 3619363**

(43) Veröffentlichungstag der Anmeldung :
**25.04.90 Patentblatt 90/17**

(45) Bekanntmachung des Hinweises auf die Patenterteilung :
**04.09.91 Patentblatt 91/36**

(84) Benannte Vertragsstaaten :
**AT BE CH FR GB IT LI LU NL SE**

(56) Entgegenhaltungen :
**EP-A- 0 191 278
WO-A- /07595
DE-A- 3 132 303
FR-A- 1 105 534
FR-A- 1 199 452
FR-A- 2 450 273**

(56) Entgegenhaltungen :
**GB-A- 1 537 663
US-A- 2 221 175
WORLD SURFACE COATINGS ABSTRACTS,
Band 53, Nr. 462, Dezember 1980, Seite 1566,
Zusammenfassung Nr. 80/8820, Old Woking,
Surrey, GB; Z. KREIDL: "Preparing granular
pigments",
RöMPP S CHEMIELEXIKON Bd. 4, S.
3213,3214.**

(60) Veröffentlichungsnummer der früheren
Anmeldung nach Art. 76 EPü : **0 268 645**

(73) Patentinhaber : **CHEMISCHE WERKE
BROCKHUES AG
Mühlstrasse 118
W-6227 Walluf (DE)**

(72) Erfinder : **Jungk, Axel Ekkehard, Dr.
Kranichstrasse 22 Wohnpark im Teich
W-6085 Nauheim (DE)**

(74) Vertreter : **Kuhnen, Wacker & Partner
Schneggstrasse 3-5 Postfach 1553
W-8050 Freising (DE)**

(54) **Verfahren zum Einfärben von Beton.**

EP 0 365 046 B1

## Beschreibung

Die Erfindung betrifft ein Verfahren zum Einfärben von Beton.

Beton im Sinne dieser Erfindung ist der zementhaltige Werkstoff zur Herstellung von Betonsteinen und Betonplatten, Betondachsteinen, Verbundsteinen, aber auch Faserzement- und/oder Zementmörtel. ·

Beton ist ein bewährter konstruktiver Baustoff, der in Form von Sichtbeton auch ästhetische Zwecke erfüllt. Die Einfärbung der Betonmasse zur Herstellung von Sichtbeton verleiht diesem eine praktisch wartungsfreie Farbigkeit für viele Jahre.

Dagegen müssen Betonflächen, die durch Anstriche dekoriert wurden, in kurzen Zeitabständen erneuert werden. Eingefärbter Beton wird z.B. in Fassaden, Platten, Pflastersteinen, Dachsteinen, Lärmwällen, Uferbefestigungen, Brücken und ähnlichen Konstruktionen, aber beispielsweise auch zur Dekoration von Fassadem im Form von eingefärbtem Mörtel verwendet.

Beton wird mittels anorganischer und neuerdings organischer Pigmente eingefärbt. Solche für Beton geeigneten Pigmente, die sich seit langer Zeit bewährt haben, sind z.B. Manganoxid, Eisenoxide und Kohlenstoff. Von diesen haben sich insbesondere Pigmente auf Basis von Kohlenstoff bzw. Eisenoxid in der Praxis gut bewährt.

Die Herstellung des eingefärbten Betons ist jedoch problematisch. Das Pigmentpulver staubt und sein Einsatz verursacht die Verunreinigung von Menschen, Maschinen und Betrieben.

Weiterhin besitzen Pigmente den Nachteil, daß sie wegen ihrer Feinteiligkeit bei der Lagerung — insbesondere bei Zutritt von etwas Feuchtigkeit — zur Brückenbildung neigen. Daher sind in Silos gelagerte Pigmentpulver schon nach kurzer Zeit nicht mehr frei fließend. Sie lassen sich daher nur mit Mühe unter erheblichem apparativem und menschlichem Aufwand aus Silos wieder austragen. Deswegen bereitet auch ihre Dosierung über Schnecken bzw. Vibrationsrinnen erhebliche Schwierigkeiten.

Im Stand der Technik wurden die bei Pigmentpulvern auftretenden Probleme des Staubens, der Lagerung im Silo (Silierung) und der automatischen Dosierung durch die Verwendung der Pigmente in Form wässriger Pigmentpasten im Betonbereich zu lösen versucht. Solche Pasten enthalten meist etwa 70-30% Wasser als Trägermedium sowie oberflächenaktive Stoffe. Die Vorteile, die solche wässrige Pigmentpasten gegenüber trockenen Pigmentpulvern aufweisen, werden jedoch mit erheblichen Nachteilen erkauft :

In der Praxis lassen sich die Pasten nicht in Silos bzw. anderen Großraumbehältern längere Zeit lagern, weil diese sich hierbei durch Absetzen entmischen und auch teilweise feste Ablagerungen bilden.

Wegen des hohen Wassergehaltes verdoppeln sich die Verpakkungskosten für die wässrigen Pigmentpasten ebenso wie die Transportkosten. Ein bedeutender Nachteil besteht auch darin, daß solche Pasten überhaupt nicht einsetzbar sind, wenn die Eigenfeuchte von Sand und Aggregaten bei der Betonzubereitung schon so hoch ist, daß zusätzliche Zugaben von Wasser — auch in Form von wässrigen Pigmentpasten — die Betonkonsistenz in einem untragbaren Maße verschlechtern. In den Bereichen Lack- und Kunststoffeinfärbung können die letztgenannten Nachteile grundsätzlich dadurch vermieden werden, daß man das Pigment nicht in Form von Pasten oder Pulvern, sondern in Form von Granulaten einsetzt. Insbesondere bei gesundheitsschädlichen Pigmenten werden Pigmentgranulate seit vielen Jahren in der Kunststoffindustrie eingesetzt.

Herstellung und Einsatz von Granulaten sind grundsätzlich in vielen Bereichen alte Tradition (vgl. H. Rumpf in "Chemie-Ing.-Technik, 30, 1958, Nr. 3, Nr. 4, Nr. 5" ; W.C. Peck in "Chemistry and Industry, Ausgabe vom 20.12.1958, Seiten 1674 ff" ; zum Schmelzgranulieren siehe U.A.W. Boretzky in "Fette-, Seifen-, Anstrichmittel, Nr. 4, 1967"). So haben sich Briketts im Kohle- und Erzbereich durchgesetzt ; Mikrokapseln werden im Durchschreibpapier verwendet ; im Agrarbereich findet sich das Futter in Form von Kompaktgranalien im Silo ; im Lacksektor lösen sich staubfreie Nitrozellulose-Pigmentkonzentrate in Lösungsmitteln einwandfrei auf ; im Kautschukbereich wird Ruß als Aufbaugranulat eingesetzt ; und PVC wird in Form von gesprühtem Perlgranulat verwendet. Dagegen ist die Einfärbung von Betonen mit Pigmentgranulat noch nicht Stand der Technik, denn Pigmentgranulate gemäß Stand der Technik waren im Einfärbeprozeß nachteilig.

Die Scherkräfte im Beton während des Mischzyklus auf die Granulate sind zum Pigmentdispergieren zu gering. Dies bedeutet :

1. Die Pigmentgranulate bilden im Beton Stippen und Farbnester ; diese machen sich als optische Fehler auf der Betonoberfläche bemerkbar.

2. Die im Vergleich zu Pulverpigmenten wesentlich schlechtere Dispergierung der Pigmente während des Mischzyklus im Betonmischer führt zu einer mangelhaften Ausnutzung der Farbkraft des Granulates. Dementsprechend muß eine höhere Menge an Pigmentgranulaten als an Pigmentpulver eingesetzt werden, um einen identischen Farbton in der Betonmischung zu erzielen.

3. Die Verwendung von bindemittelhaltigem Pigmentgranulat bringt Fremdstoffe in den Beton ein, ohne die nachteiligen Dispergierschwierigkeiten zu verbessern.

4. Im Beton findet sich nicht genügend Feuchte und Zeit, um bindemittelhaltige Granulate aufzulösen.

Dieser Nachteile wegen werden z.Zt. auch sprühgetrocknete Betonpigmente wieder über eine Mahlung in ihre Pulver überführt, bevor sie zur Einfärbung von Beton zum Einsatz kommen.

Die FR-A-2450273 beschreibt die Färbung von Zement mit einer Dispersion, die aus rußhaltigen Granulaten ohne Anwesenheit weiterer Pigmente hergestellt worden ist. Die nachveröffentlichte EP-A-0191278 beschreibt Farbpräparationen für die Massefärbung von Baustoffen, die aus einem schüttfähigen Feuchtgranulat bestehen, welches nicht durch Sprühtrocknung hergestellt worden ist.

Der Erfindung liegt daher die Aufgabe zugrunde, ein Verfahren zum Einfärben von Beton zur Verfügung zu stellen, wodurch die Nachteile aus der Anwendung von Farbpulvern von wäßrigen Pigmentpasten oder von Pigmentgranulaten gemäß Stand der Technik vermieden werden.

Diese Aufgabe wird erfindungsgemäß dadurch gelöst, daß man als Färbemittel durch Sprühtrocknung hergestellte Pigmentgranulate mit einem Wassergehalt über 4,2%, einsetzt, die aus einem oder mehreren Pigmenten mit Ausnahme von Kohlenstoffpigment allein sowie einem oder mehreren die Dispergierung der Pigmente im Beton fördernden Bindemittel (n) und gegebenenfalls anderen Zusatzstoffen bestehen.

Bevorzugte Ausführungsformen der Erfindung werden in den Unteransprüchen 2 bis 5 genannt.

Diese Aufgabe wird weiterhin gelöst durch die Verwendung von durch Sprühtrocknung hergestellten Pigmentgranulaten, die aus einem oder mehreren Pigmenten mit Ausnahme von Kohlenstoffpigment allein sowie einem oder mehreren die Dispergierung der Pigmente im Beton fördernden Bindemittel (n) und gegebenenfalls anderen Zusatzstoffen bestehen und einen Wassergehalt über 4,2% besitzen, zum Einfärben von Beton.

Die Herstellung geeigneter Pigmentgranulate ist gemäß Stand der Tecknik durch Sprühtrocknung möglich.

So eignen sich feinteilige Granulate aus Sprühtrocknungsprozessen der Mischungen aus Pigmenten, Bindemitteln, Flüssigkeit, vorzugsweise Wasser und ggf. anderen Stoffen.

Besonders geeignet sind Perlgranulate.

Erstaunlicherweise wurde gefunden, daß sich obenerwähnte Granulate im Betonmischer gut auflösen. Daher sind sie im praktischen Gebrauch gut einsetzbar. Ferner verteilen sie sich homogen im Beton, so daß Sichtbeton ohne Stippen und Farbnester einwandfrei eingefärbt wird. Ihre Verwendung ist auch wirtschaftlich, da mit der gleichen Menge an im Granulat enthaltenem Pigment eine gleich tiefe Einfärbung erzielbar ist, wie die mit der entsprechenden Menge des Pigmentes in Pulverform.

Das erfindungsgemäß eingesetzte Granulat fließt frei aus einem Silo und läßt sich pneumatisch fördern. Es ist in der Handhabung praktisch staubfrei. Damit eignet sich das erfindungsgemäß Verfahren insbesondere zur automatischen, sauberen Einfärbung von Betonen.

Als Pigment werden Z.B. Manganoxid, Eisenoxid oder organische Pigmente verwendet. Auch werden Mischungen der einzelnen Pigmente eingesetzt.

In dem erfindungsgemäß verwendeten Granulat, vorzugsweise Perlgranulat, wird das Pigment mit einem die Dispergierung des Pigmentes in Beton fördernden Bindemittel vermischt. Gegebenenfalls können zusätzlich andere Bindemittel, die in Beton nicht stören, eingesetzt werden. Zur Einfärbung sind in den Granulaten, vorzugsweise in den Perlgranulaten, die Kombinationen aus Pigment und den folgenden technisch verfügbaren, die Dispergierung der Pigmente in Beton fördernden Bindemitteln einsetzbar :

Alkylphenol, z.B Igepal $C^R$ ;

ein Eiweißfettsäurekondensationsprodukt, z.B. Lamepon$^R$ ;

Alkylbenzolsulfonat, auch in Form seines Salzes, z.B. Marlon$^R$ ;

Alkylnaphtalinsulfonat, z.B. Necal BXR$^R$ ;

Ligninsulfonat, z.B. Sulfitablauge, z.B. Waldhoflauge$^R$ ;

sulfatierter Polyglykolether, z.B. ein solcher von Fettalkoholen oder Alkylphenolen oder sein Salz ;

ein Melaminformaldehydkondensat, ein Naphtalinformaldehydkondensat, Gluconsäure, andere betonunschädliche Polyhydroxiverbindungen, Salze von niedrig molekularen teilveresterten Styrolmaleinsäureanhydrid-Copolymerisaten und von Copolymeren aus Vinylacetat und Krotonsäure. Als Bindemittel besonders bevorzugt ist Ligninsulfonat, z.B. Ammoniumligninsulfonat.

Die bevorzugte Granulatform für das erfindungsgemäße Verfahren ist das Perlgranulat. Dieses wird über Sprühtrockner durch Einstoff- oder Mehrstoffdüsen bzw. Zerstäuberscheiben in einem Sprühturm aus Gemischen von Pigment, Bindemittel und Flüssigkeit, vorzugsweise Wasser und gegebenenfalls anderen Zusatzstoffen hergestellt. Die Perlgranulate fallen in Form von Mikrogranulaten an, wobei 90% der Pigmentteilchen eine Größe von 20 bis 500 µm, insbesondere eine Größe von 50 bis 300 µm besitzen

Die Menge an eingesetztem Bindemittel, das die Dispergierung des Pigmentes im Beton fördert, beträgt 0,1 bis 15 Gew.-%, bezogen auf das Granulat, vorzugsweise 1 bis 8 Gew.-%, insbesondere 2 bis 6 Gew.-%.

## Patentansprüche

1. Verfahren zum Einfärben von Beton, dadurch gekennzeichnet, daß man als Färbemittel durch Sprühtrocknung hergestellte Pigmentgranulate mit einem Wassergehalt über 4,2%, einsetzt, die aus einem oder mehreren Pigmenten mit Ausnahme von Kohlenstoffpigment allein sowie einem oder mehreren die Dispergierung der Pigmente im Beton fördernden Bindemittel (n) und gegebenenfalls anderen Zusatzstoffen bestehen.

2. Verfahren nach Anspruch 1, dadurch gekennzeichnet, daß die Pigmente Eisenoxide sind.

3. Verfahren nach Anspruch 1 oder 2, dadurch gekennzeichnet, daß die Dispergierung der Pigmente im Beton fördernden Bindemittel ein Alkylbenzolsulfonat, Alkylnaphthalinsulfonat, Ligninsulfonat, ein sulfatierter Polyglykoläther, Melaminformadehydkondensat, Naphthalinformaldehydkondensat, Glukonsäure, eine andere betonunschädliche Polyhydroxiverbindung, ein Salz eines niedrigmolekularen teilveresterten Styrol-Maleinsäureanhydrid-Copolymerisats und/oder ein Copolymeres aus Vinylacetat und Krotonsäure ist.

4. Verfahren nach Anspruch 1, 2 oder 3, dadurch gekennzeichnet, daß das Bindemittel ein Ligninsulfonat ist.

5. Verfahren nach einem der Ansprüche 1 bis 4, dadurch gekennzeichnet, daß die Granulate durch Sprühgranulieren eines Gemisches aus Pigment, Bindemittel und Flüssigkeit, vorzugsweise Wasser und gegebenenfalls anderen Zusatzstoffen, hergestellt wurden

6. Verwendung von durch Sprühtrocknung hergestellten Pigmentgranulaten, die aus einem oder mehreren Pigmenten mit Ausnahme von Kohlenstoffpigment allein sowie einem oder mehreren die Dispergierung der Pigmente im Beton fördernden Bindemittel (n) und gegebenenfalls anderen Zusatzstoffen bestehen und einen Wassergehalt über 4.2% besitzen, zum Einfärben von Beton.

## Claims

1. A process for the dyeing of concrete, characterised in that the dyeing agent used is pigment granulates produced by spray-drying and having a water content in excess of 4.2%, such granulates consisting of one or more pigments excluding carbon pigment alone and one or more binders which promote the dispersion of the pigments in the concrete, and, if required, other additives.

2. A process according to claim 1, characterised in that the pigments are iron oxides.

3. A process according to claim 1 or 2, characterised in that the binder promoting the dispersion of the pigments in the concrete is an alkylbenzene sulphonate, alkylnaphthalene sulphonate, lignin sulphonate, a sulphated polyglycol ether, melamine formaldehyde condensate, naphthalene formaldehyde condensate, gluconic acid, another polyhydroxy compound nonharmful to concrete, a salt of a low-molecular partially esterified styrene maleic acid anhydride copolymer and/or a copolymer of vinylacetate and crotonic acid.

4. A process according to claim 1, 2 or 3, characterised in that the binder is a lignin sulphonate.

5. A process according to any one of claims 1 to 4, characterised in that the granulates are prepared by spray-granulation of a mixture of pigment, binder and liquid, preferably water and, if required, other additives.

6. Use of pigment granulates produced by spray-drying and consisting of one or more pigments excluding carbon pigment alone and one or more binders which promote the dispersion of the pigments in the concrete, and, if required, other additives, and having a water content in excess of 4.2%, for dyeing concrete.

## Revendications

1. Procédé de coloration du béton *caractérisé par* l'utilisation comme colorant de pigments en granulés qui sont obtenus par séchage par pulvérisation, qui présentent une teneur en eau supérieure à 4,2% et qui se composent d'un ou plusieurs pigments à l'exception de pigments à base de carbone seul, d'un ou plusieurs liants (n) favorisant la dispersion des pigments dans le béton et, éventuellement d'autres additifs.

2. Procédé selon la revendication 1 *caractérisé en ce que* les pigments sont des oxydes de fer.

3. Procédé selon les revendications 1 ou 2 *caractérisé en ce que* les liants favorisant la dispersion des pigments dans le béton sont du sulfonate de benzène d'alkyle, du sulfonate de naphtaline d'alkyle, du sulfonate de lignine, de l'éther de polyglycol sulfaté, un condensat de mélamine-formaldéhyde, un condensat de naphtaline-formaldéhyde, de l'acide gluconique, un autre composé polyhydroxylé inoffensif pour le béton, un sel d'un copolymère styrène d'anhydride maléique à molécularité faible, partiellement estérifié et/ou un copolymère d'acétate vinylique et d'acide crotonique.

4. Procédé selon l'une des revendications 1 à 3 *caractérisé en ce que* le liant est du sulfonate de lignine.

5. Procédé selon l'une des revendications 1 à 4 *caractérisé en ce que* les granulés sont obtenus au moyen d'une granulation par pulvérisation d'un mélange se composant de pigments, de liants, de liquide, de préférence de l'eau, et, en tant que de besoin, d'autres additifs.

6. Utilisation pour la coloration de béton de pigments en granulés qui sont obtenus par séchage par pulvérisation, qui sont constitués d'un ou plusieurs pigments à l'exception de pigments à base de carbone seul, d'un ou plusieurs liants (n) favorisant la dispersion des pigments dans le béton et, en tant que de besoin, d'autres additifs, et qui possèdent une teneur en eau supérieure à 4,2%.